# EUROPÄISCHE PATENTSCHRIFT

(11) **EP 3 348 743 B1**
(45) Veröffentlichungstag und Bekanntmachung des Hinweises auf die Patenterteilung: **24.07.2019**
(21) Anmeldenummer: 17000071.5
(22) Anmeldetag: 14.01.2017
(51) Int. Cl.: E04F 13/08, E04B 1/76, F16B 35/02

(54) **VERBINDUNGSSYSTEM ZUR VERBINDUNG VON BAUELEMENTEN**
CONNECTION SYSTEM FOR CREATING A LINK BETWEEN BUILDING ELEMENTS
SYSTÈME DE LIAISON SERVANT À RELIER DES ÉLÉMENTS DE CONSTRUCTION

(43) Veröffentlichungstag der Anmeldung: 18.07.2018
(73) Patentinhaber: Hertkorn, Regina, 74861 Neudenau (DE)
(72) Erfinder: Hertkorn, Regina, 74861 Neudenau (DE)
(74) Vertreter: Quarder, Heinrich

(56) Entgegenhaltungen:
- EP-A2- 0 411 442
- EP-A2- 1 650 368
- EP-A2- 2 416 018
- WO-A1-2013/079879
- DE-A1-102009 044 748
- DE-U1-202004 000 856

## Beschreibung

Die Erfindung betrifft ein Verbindungssystem zur Verbindung von zwei Bauelementen.

### Stand der Technik

Bekannt sind Vorrichtungen zur Verbindung von Bauelementen an Gebäuden wie beispielsweise Dämmstoffdübel oder Bewehrungsstäbe.

Bei isolierten Gebäude-, Fassaden-, Tür- oder Fensterkonstruktionen werden üblicherweise die in unterschiedlichen Temperaturzonen angeordneten Bauelemente über Schrauben, Nieten oder ähnliche Befestigungselemente miteinander verbunden. Über die in der Regel aus Metall bestehenden Befestigungselemente entsteht jedoch zwischen den in unterschiedlichen Temperaturzonen angeordneten Bauelementen eine Kältebrücke, über die ein Wärmeabfluss von den wärmeren zu den kälteren Bauelementen erfolgt. Dadurch können die Isolations- und Wärmedämmeigenschaften des Gebäudes beeinflusst werden.

Die DE 20 2009 012 753 U1 offenbart diesbezüglich eine Vorrichtung zur Verbindung in unterschiedlichen Temperaturzonen angeordneten Bauelementen mit einem zwischen den Bauelementen angeordneten Befestigungselement, wobei dem Befestigungselement eine thermisch isolierende Haltebuchse zum Einsetzen in eines der Bauelemente zugeordnet ist.

Die EP 1 650 368 A2 offenbart einen Verschlussdeckel für eine Befestigungsanordnung. Dabei ist eine Grundplatte ausgebildet, die eine Durchführöffnung für ein Verankerungselement der Befestigungsanordnung und einen von der Grundplatte abragenden, umlaufenden ersten Steg sowie einen von der Grundplatte abragenden zweiten Steg aufweist, wobei ein Aufnahmeraum für eine zumindest bereichsweise Aufnahme eines Abstandselements ausgebildet ist.

Die Ausführungen der DE 2009 044 781 A1 betreffen einen Abstandshalter zur Befestigung eines Gegenstands an einem eine Dämmschicht aufweisenden Untergrund. Der Abstandshalter ist als Hülse ausgebildet, die aus lochscheibenförmigen Segmenten zusammengesetzt ist, die nach Art einer Klauenkupplung formschlüssig ineinander greifend zusammengesteckt sind.

Die Offenbarung der EP 2 416 018 A1 betrifft einen Abstandshalter für die Befestigung eines Gegenstandes an einem eine Dämmschicht aufweisenden Untergrund. Der Abstandshalter weist zwei in axialer Richtung voneinander beabstandete Gewindehülsen auf. Eine erste Gewindehülse dient zur Aufnahme eines Ankerbolzens und eine zweite Gewindehülse zur Aufnahme eines Justierbolzens. Der Abstandshalter weist eine an der Außenseite der zweiten Gewindehülse angebrachte, sich in radialer Richtung erstreckende, die Gewindehülsen in radialer Richtung überragende Abdeckkappe aus.

Die DE 20 2004 000 856 U1 offenbart eine Distanz-Wandhalterung mit zentrischer Einloch-Befestigung. Die Wandhalterung ist aus einem Rohrabschnitt und einem Kopfteil mit einer zentrischen, angesenkten Bohrung ausgebildet und durch einen in die Bohrung eingesetzten Schraubbolzen mit einem Verbindungsteil an Wandankern, Klebeankerstangen oder Stockschrauben befestigt, wobei das Kopfteil in Form einer runden Scheibe mit dem gleichen Außendurchmesser wie der Rohrabschnitt, einen kurzen Stutzen aufweist, der ein Einschlagen oder Einstecken und Einkleben in ein Rohrende erlaubt, und das Kopfteil mindestens zwei Gewindebohrungen aufweist und dass die Wandhalterung aus Edelstahl besteht.

Die Erfindung WO 2013/079879 A1 betrifft eine Abstandsvorrichtung für eine Vorrichtung zum Befestigen eines Gegenstandes an einer mit einer Isolierschicht bedeckten Wand. die Abstandshaltevorrichtung ist aus einem wärmeisolierenden Material hergestellt und umfasst eine vordere Oberfläche, die dazu bestimmt ist, der Wand zugewandt zu sein, eine hintere Oberfläche, die dem zu befestigenden Objekt zugewandt sein soll, mindestens eine laterale Seite, die dazu bestimmt ist, der isolierenden Schicht zugewandt zu sein mindestens eine axiale Öffnung, die sich von der vorderen Fläche und mindestens zu der hinteren Fläche erstreckt und dazu bestimmt ist, auf der Innenseite ein Befestigungselement aufzunehmen, das die Befestigungsvorrichtung entnimmt. auf der Innenseite weist die Abstandshaltevorrichtung weiterhin mindestens einen auf die hintere Fläche und mindestens auf eine seitliche Seite mündenden Kanal auf, der zur Aufnahme eines thermisch isolierenden Füllmaterials bestimmt ist.

Die EP 0 411 442 A2 offenbart eine Halterungsanordnung für vorgehängte Fassadenverkleidungsplatten aus Stein oder einem ähnlichen Material. Die Halterungsanordnung umfasst Tragprofile, die mit Haltestegen in Aufnahmenuten in zwei gegenüberliegenden Randflächen der Verkleidungsplatten in diesen durchlaufend eingreifen. Auf den Haltestegen sind in den Eckbereichen der Verkleidungsplatten Fixierprofile angeordnet, die eine Zweipunktlagerung der Verkleidungsplatten auf den Tragprofilen ergeben. Der von den Wänden der Nuten und den Stegen abgegrenzte Raum ist dabei mit einem Kleber bevorzugt aus Silikon ausgefüllt.

Nachteilig an den bekannten Vorrichtungen ist, dass beim Auftreten selbst von minimalen Querkräften bei gleichzeitiger Verformung in Querrichtung ein Verschieben an der Außenseite der Konstruktion entsteht. Zudem sind die zu verankernden Kräfte, z.B. durch Dübel, an einer Mauerwerkswand nur sehr begrenzt möglich. Dies schränkt die Anwendung derartiger Dübel sehr ein. Oftmals müssen mehrere Dübel zueinander versetzt in Zeilen oder Gruppen angeordnet werden. Dies bedarf einen hohen Aufwand. Eine sichere Verbindung der beiden Bauelemente sowie eine thermisch isolierende Wirkung ist dadurch nicht gewährleistet.

Aufgabe der Erfindung ist es daher, eine Vorrichtung zur Verbindung zweier Bauelemente zur Verfügung zu stellen, die verbesserte thermische Isolierung ermöglicht.

### Offenbarung der Erfindung

Es wird ein Verbindungssystem offenbart, das der Verbindung zweier Bauelemente eines Gebäudes, die in unterschiedlichen Temperaturzonen angeordnet sind, dient. Diese zwei Bauelemente sind ein erstes Bauelement, insbesondere ein wärmegedämmtes Gebäude mit oder ohne Unterkonstruktion, sowie als zweites Bauelement ein von dem Gebäude vorkragendes Gebäudeteil. Um eine sichere und thermisch isolierende Verbindung zu schaffen, ist zwischen dem Gebäude und dem Gebäudeteil ein Druckelement in Form eines Druck- und Querkraftkörpers angeordnet. Dieses Druckelement ist aus druckfestem Material ausgebildet und nimmt die Druck- sowie Querkräfte, die darauf wirken, auf. Dieses Verbindungssystem wird insbesondere dann verwendet, wenn aufgrund der durchgeführten Baumaßnahmen eine Öffnung in das bereits vorhandene Wärmedämmsystem eingebracht wird.

Der Druck- und Querkraftkörper bzw. Dämmblock ist ein druckfestes Abstandselement, das die Funktion einer thermischen Trennung aufweist. Der Druck- und Querkraftkörper kann ein- oder mehrteilig ausgebildet sein. Der Druck- und Querkraftkörper kann aus Verbundmaterial, Metall, Holz und/oder Kunststoffen ausgebildet sein. Der Druck- und Querkraftkörper ist auf Druck und Querkraft ausgelegt.

Die beiden Bauelemente werden über ein Element zur Zugkraftaufnahme, also ein Verbindungsmittel, das durch den Druck- und Querkraftkörper führt, miteinander verbunden. Dies erfolgt beispielsweise über eine Gewindestange. Dieses Element zur Zugkraftaufnahme ist für die Beanspruchung auf Zug und geringe Querkraft ausgelegt. Das Element zur Zugkraftaufnahme bzw. das Verbindungsmittel ist in einer Ausbildung als ein durchgehendes einzelnes Element ausgebildet. Es kann in einer abweichenden Ausbildung geteilt mit einer Schraubhülse ausgebildet sein. In der geteilten Ausbildung ist beispielsweise eine Senkkopfschraube mit einer Verbindungshülse verbindbar. Damit sind die beiden Bauelemente direkt oder über eine Verschraubungs- bzw. Verbindungshülse über den Druck- und Querkraftkörper miteinander verbunden. Dadurch entsteht ein Kräftepaar, bei dem die Zugkraft vom Element zur Zugkraftaufnahme aufgenommen wird und die Druckkraft sowie Querkräfte vom Druck- und Querkraftkörper aufgenommen werden. Dies führt zur Minimierung der Verformung des Elements zur Zugkraftaufnahme beim Einwirken der angreifenden Kräfte, insbesondere bei Querkräften.

Die erfindungsgemäße Kombination aus dem Druck- und Querkraftkörper sowie dem Element zur Zugkraftaufnahme ermöglicht ein Einsetzen in das in die vorhandene Wärmedämmung eingebrachte Öffnung bzw. das Loch. In die ggf. verbleibenden Fugen zwischen dem Druck- und Querkraftkörper und der bereits am Gebäudeteil angeordneten Dämmschicht können Dichtmittel eingespritzt werden, um die Fugen abzudichten bzw. eine einheitliche Dämmung herzustellen. Es ist somit ein System zur Minimierung der Verankerungskräfte am Gebäude mit einer Zug-, Druck- und Querkraftaufnahme ausgebildet. Eine Verformung des Elements zur Zugkraftaufnahme sowie die statische Auslastung ist dadurch minimiert, dass Druck- und Querkräfte im Druckelement aufgenommen werden. Dadurch entsteht keine Bauschäden. Es resultiert eine statische Minimierung sowie eine Minimierung des Elements zur Zugkraftaufnahme sowie der zu verankernden Dübel und Schrauben.

Das anzubringende zweite Bauelement kann insbesondere eine Leuchte, eine Markise, eine Halterung für ein kleineres Element wie beispielsweise ein Basketballkorb o.dgl. sein. In einer größeren Ausbildung kann das Bauelement jedoch auch An- oder Aufbauelemente, ein Geländersystem, Brüstungselemente, Fassaden- oder Dachelemente, ein Vordach, eine Loggia, Windfangelemente o.dgl., sein.

Das erfindungsgemäße Verbindungssystem hat dabei den Vorteil, dass sowohl eine sichere Verbindung durch das Element zur Zugkraftaufnahme bzw. die Gewindestange erfolgt als auch, dass eine thermische Trennung durch den Druck- und Querkraftkörper erfolgt. Damit ist die Entstehung von Kältebrücken minimiert, eine Beschädigung der Gebäudewand oder der Unterkonstruktion bei sachgemäßer Anwendung selbst bei beispielsweise Windbelastung ausgeschlossen und das anzuordnende Bauelement ist sicher mit dem Gebäudeteil verbunden.

Weitere Vorteile und vorteilhafte Ausgestaltungen der Erfindung sind der nachfolgenden Figurenbeschreibung, den Zeichnungen und den Ansprüchen entnehmbar.

Nachfolgend werden Beispiele von Verbindungssystemen anhand der beigefügten schematischen Zeichnungen näher erläutert. Es zeigt:
- Fig. 1: zeigt ein Element zur Zugkraftaufnahme zwischen zwei Bauteilen eines Gebäudes im Längsschnitt und
- Fig. 2: zeigt das geteilte Element zur Zugkraftaufnahme zwischen den beiden Bauteilen im Längsschnitt.

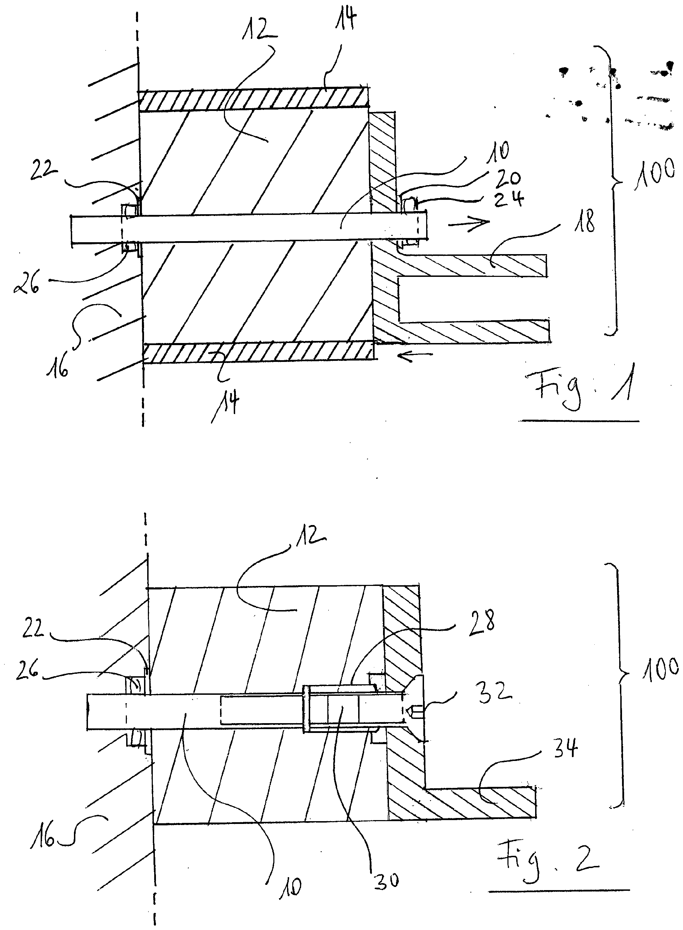

In Fig. 1 ist ein Element zur Zugkraftaufnahme 10 angeordnet. Dieses Element zur Zugkraftaufnahme 10 ist auf Zug und geringe Querkräfte ausgelegt. Das Element zur Zugkraftaufnahme 10 ist durch einen Druck- und Querkraftkörper 12 geführt. Der Druck- und Querkraftkörper 12 ist zur Aufnahme von Druck sowie Querkraft ausgelegt. Diese beiden bilden somit ein Kräftepaar. Auf den Druck- und Querkraftkörper 12 wirken durch die genannten Zugkräfte Druckkräfte, aber auch Querkräfte ein. Aus dem Zug und den Querkräften wirkt aus der begrenzten Querverformung des Elements zur Zugkraftaufnahme 10 die genannte Druckkraft auf den Druck- und Querkraftkörper 12. Die auf den Druck- und Querkraftkörper 12 einwirkenden Druck- und Querkräfte können durch die Anlage am Gebäudeteil oder einer Unterkonstruktion abgeleitet werden. Dadurch erfolgt eine Minimierung einer Querbiegung des Elements zur Zugkraftaufnahme 10. Es kann auch ohne Mutter(n) oder Unterlegscheibe(n) eingeklebt oder eingeschraubt werden. Der Druck- und Querkraftkörper 12 ist in dieser Ausbildung mit Isolierelementen 14 ausgebildet. Durch das Element zur Zugkraftaufnahme 10 ist eine Unterkonstruktion 16 eines Gebäudeteils, das ein erstes Bauelement darstellt, mit einem zweiten Bauelement, in diesem Ausführungsbeispiel ein Vordachelement 18, verbunden. Durch den Druck- und Querkraftkörper 12 sind diese beiden Bauelemente thermisch voneinander getrennt.

Das Element zur Zugkraftaufnahme 10 weist an jeder seiner beiden Enden in diesem Ausführungsbeispiel jeweils eine Unterlegscheibe 20, 22 auf. Das Element zur Zugkraftaufnahme 10 wird dabei an jedem seiner beiden Enden durch eine Mutter 24, 26 gehalten. Dadurch wird ein Verbindungssystem 100 gebildet.

Fig. 2 zeigt eine weitere Ausführungsform der Vorrichtung. Dabei ist das Element zur Zugkraftaufnahme 10 zweiteilig ausgebildet und weist eine Verbindungshülse 28 auf. Es ist ein Luftraum 30 ausgebildet. Das Element zur Zugkraftaufnahme 10 ist damit durch eine Senkkopfschraube 32 am Druck- und Querkraftkörper 12 gehalten. Damit ist das zweite Bauelement 34 über den Druck- und Querkraftkörper 12 sicher mit dem ersten Bauelement, der Unterkonstruktion 16, das mit dem ersten Bauelement verbunden ist, verbunden.

### Bezugszeichenliste

- 10: Element zur Zugkraftaufnahme
- 12: Druck- und Querkraftkörper,
- 14: Isolierelement
- 16: Unterkonstruktion
- 18: Vordachelement
- 20: Unterlegscheibe
- 22: Unterlegscheibe
- 24: Mutter
- 26: Mutter
- 28: Verbindungshülse
- 30: Luftraum
- 32: Senkkopfschraube
- 34: zweites Bauelement

- 100: Verbindungssystem

## Patentansprüche

1. Verbindungssystem zur Verbindung eines ersten Bauelements, das aus einem Gebäude und/oder einer Unterkonstruktion (16) für das Gebäude gebildet wird, mit einem zweiten Bauelement (18, 34), wobei das Verbindungssystem mindestens ein Element zur Zugkraftaufnahme (10) sowie mindestens einen Druck- und Querkraftkörper (12), der als druckfestes Abstandselement ausgebildet ist, aufweist, wobei das Element zur Zugkraftaufnahme (10) durch den Druck- und Querkraftkörper (12) geführt ist und wobei das Element zur Zugkraftaufnahme (10) sowie der Druck- und Querkraftkörper (12) in eine Öffnung einer Wärmedämmung oder eine Unterkonstruktion einsetzbar und mit dem Gebäude und/oder der Unterkonstruktion verbindbar sind, so dass das Verbindungssystem zur Minimierung der Verankerungskräfte eine Zug-, Druck- und Querkraftaufnahme aufweist, wobei die bei der Verbindung mit dem zweiten Bauelement (18, 34) entstehende Zugkraft durch das Element zur Zugkraftaufnahme (10) und die Druck- und/oder die Querkraft durch den Druck- und Querkraftkörper (12) aufgenommen werden, **dadurch gekennzeichnet, dass** das Element zur Zugkraftaufnahme (10) zweiteilig ausgebildet ist und eine Verbindungshülse (28) sowie einen Luftraum (30) aufweist und dass der Druck- und Querkraftkörper (12) Isolierelemente (14) und/oder Verkleidungselemente aufweist.

2. Verbindungssystem nach Anspruch 1, **dadurch gekennzeichnet, dass** das Element zur Zugkraftaufnahme (10) eine thermische Trennfunktion aufweist.

3. Verbindungssystem nach einem der vorhergehenden Ansprüche, **dadurch gekennzeichnet, dass** der Druck- und Querkraftkörper (12) aus Verbundmaterial, Metall, Kunststoffen, geschäumten Kunststoffen oder Holz ausgebildet ist.

4. Verbindungssystem nach einem der vorhergehenden Ansprüche, **dadurch gekennzeichnet, dass** das Element zur Zugkraftaufnahme (10) jeweils mindestens eine Unterlegscheibe (20, 22) und eine Mutter (24, 26) aufweist.

5. Verbindungssystem nach einem der vorhergehenden Ansprüche, **dadurch gekennzeichnet, dass** das zweite Bauelement (18) eine Leuchte, eine Markise oder eine Halterung für ein Anbauelement ist.

6. Verbindungssystem nach einem der Ansprüche 1 bis 4, **dadurch gekennzeichnet, dass** das zweite Bauelement (34) An- oder Aufbauelemente, ein Geländersystem, Brüstungselemente, Fassaden- oder Dachelemente, ein Vordach, eine Loggia oder Windfangelemente ist oder sind.

7. Verbindungssystem nach einem der vorhergehenden Ansprüche, **dadurch gekennzeichnet, dass** der Druck- und Querkraftkörper (12) eine thermisch trennende Funktion aufweist.

8. Verbindungssystem nach einem der vorhergehenden Ansprüche, **dadurch gekennzeichnet, dass** ein Anteil der auf das Verbindungssystem wirkenden Querkraft im auskragenden Bereich des Elements zur Zugkraftaufnahme (10) auf den Druck- und Querkraftkörper (12) übertragen wird.

9. Verbindungssystem nach Anspruch 8 **dadurch gekennzeichnet, dass** die auf den Druck- und Querkraftkörper (12) übertragene Querkraft vom Druck- und Querkraftkörper (12) im Anschlussbereich zu dem Gebäude und/oder der Unterkonstruktion in das Element zur Zugkraftaufnahme (10) eingeleitet und in das Gebäude und/oder die Unterkonstruktion abgeleitet wird.

## Claims

1. Connection system for connecting a first constructive element, which is formed from a building and/or a substructure (16) for the building, with a second constructive element (18, 34), wherein the connection system comprises at least one element for traction force absorption (10), as well as at least one pressure and transversal force body (12) which is formed as a pressure-resistant spacer element, wherein the element for traction force absorption (10) is guided through the pressure and transversal force body (12), and wherein the element for traction force absorption (10) as well as the pressure and transversal force body (12) are insertable in an opening of a thermal insulation or in a substructure, and are connectable with the building and/or the substructure, so that the connection system comprises a traction, pressure and transversal force absorption to minimize the anchoring forces, wherein the traction force created in the connection with the second constructive element (18, 34) is absorbed by the element for traction force absorption (10), and the pressure and/or transversal force is absorbed by the pressure and transversal force body (12), **characterized in that** the element for traction force absorption (10) is configured in two parts and comprises a connecting sleeve (28) as well as an air space (30), and **in that** the pressure and transversal force body (12) comprises insulating elements (14) and/or cladding elements.

2. Connection system according to claim 1,
**characterized in that** the element for traction force absorption (10) has a thermal separation function.

3. Connection system according to one of the preceding claims,
**characterized in that** the pressure and transversal force body (12) is formed of a composite material, metal, plastic materials, foamed synthetic materials or wood.

4. Connection system according to one of the preceding claims, **characterized in that** the element for traction force absorption (10) comprises respectively at least one washer plate (20, 22) and a nut (24, 26).

5. Connection system according to one of the preceding claims, **characterized in that** the second constructive element (18) is a lamp, a sunshade or a holder for an attachment element.

6. Connection system according to one of claims 1 to 4, **characterized in that** the second constructive element (34) is/are attachment-or structural elements, a railing system, ledge elements, façade or roof elements, a porch roof, a loggia or vestibule elements.

7. Connection system according to one of the preceding claims, **characterized in that** the pressure and transversal force body (12) has a thermal separation function.

8. Connection system according to one of the preceding claims, **characterized in that** a part of the transversal force acting on the connection system, in the projecting region of the element for traction force absorption (10), is transmitted onto the pressure and transversal force body (12).

9. Connection system according to claim 8, **characterized in that** the transversal force, transmitted on to the pressure and transversal force body (12), is introduced, by the pressure and transversal force body (12), in the connecting region with the building and/or the substructure, into the element for traction force absorption (10), and is deflected into the building and/or the substructure.

## Revendications

1. Système de raccordement pour le raccordement d'un premier composant, qui est formé à partir d'un bâtiment et/ou d'une substructure (16) pour le bâtiment, avec un deuxième composant (18, 34), dans lequel le système de raccordement présente au moins un élément pour absorber la force de traction (10) ainsi que au moins un corps de force de compression/transversale (12), qui est configuré comme élément d'espacement résistant à la pression, dans lequel l'élément pour absorber la force de traction (10) est guidé à travers le corps de force de compression/transversale (12) et dans lequel l'élément pour absorber la force de traction (10) ainsi que le corps de force de compression/transversale (12) est insérable dans une ouverture d'une isolation thermique ou une substructure et pouvant être reliés avec le bâtiment et/ou la substructure, de sorte que le système de raccordement présente un absorption de forces de traction, de pression et transversale pour la minimisation des forces d'ancrage, dans lequel la force de traction crée lors du raccordement avec le deuxième composant (18, 34) est absorbée par l'élément pour absorber la force de traction (10) et la force de compression et/ou transversale est absorbée par le corps de force de compression/transversale, **caractérisé en ce que** l'élément pour absorber la force de traction (10) est configuré en deux parties et présente une douille de raccordement (28) ainsi qu'un espace d'air (30) et que le corps de force de compression/transversale (12) présente des éléments isolants (14) et/ou des éléments de revêtement.

2. Système de raccordement selon la revendication 1,
**caractérisé en ce que** l'élément pour absorber la force de traction (10) présente une fonction de séparation thermique.

3. Système de raccordement selon l'une quelconque des revendications précédentes, **caractérisé en ce que** le corps de force de compression/transversale (12) est formé à partir du matériau composite, du métal, des matières synthétiques, des matières synthétiques expansées ou du bois.

4. Système de raccordement selon l'une quelconque des revendications précédentes, **caractérisé en ce que** l'élément pour absorber la force de traction (10) présente respectivement au moins une rondelle (20, 22) et un écrou (24, 26).

5. Système de raccordement selon l'une quelconque des revendications précédentes, **caractérisé en ce que** le deuxième composant (18) est une lampe, une marquise ou un support pour un élément rapporté.

6. Système de raccordement selon l'une quelconque des revendications 1 à 4, **caractérisé en ce que** le deuxième composant (34) est/sont des éléments rapportés et/ou structurels, un système de garde-corps, des éléments de balustrade, des éléments de façade ou de toit, un auvent, une loggia ou des composants coupe-vent.

7. Système de raccordement selon l'une quelconque des revendications précédentes, **caractérisé en ce que** le corps de force de compression/ transversale (12) présente une fonction de séparation thermique.

8. Système de raccordement selon l'une quelconque des revendications précédentes, **caractérisé en ce qu'**une partie de la force transversale agissant sur le système de raccordement dans la zone saillante de l'élément pour absorber la force de traction (10) est transmise sur le corps de force de compression/transversale (12).

9. Système de raccordement selon la revendication 8, **caractérisé en ce que** la force transversale transmise sur le corps de force de compression/transversale (12) peut être introduit dans l'élément pour absorber la force de traction (10) par le corps de force de compression/transversale (12) dans une zone de raccordement au bâtiment et/ou peut être dérivé dans le bâtiment et/ou la substructure.
